# EUROPÄISCHE PATENTANMELDUNG

(11) **EP 2 383 098 A1**
(43) Veröffentlichungstag der Anmeldung: **02.11.2011**
(21) Anmeldenummer: 10004573.1
(22) Anmeldetag: 30.04.2010
(51) Int. Cl.: B29C 44/30

(54) **Befestigung von Formstücken an Dichtketten einer Doppelbandanlage**

(71) Anmelder: Siempelkamp Maschinen- und Anlagenbau GmbH & Co.KG, 47803 Krefeld (DE)
(72) Erfinder: Die Erfindernennung liegt noch nicht vor
(74) Vertreter: Szynka, Dirk

(57) **Zusammenfassung**

Die Erfindung betrifft die Befestigung von Kettengliedern 5 einer Dichtkette für Doppelbandanlagen an entsprechenden Dichtklötzen 24 und sieht hierzu zusätzlich zu einer Schraube 19 einen Gegenlagerkörper 11 in einem Loch 10 vor.

## Beschreibung

Die vorliegende Erfindung bezieht sich auf eine Dichtkette für eine Doppelbandanlage und die entsprechende Doppelbandanlage selbst.

Doppelbandanlagen sind an sich bekannt und dienen zur Herstellung verschiedenster plattenartiger Materialien. Ein oberes und ein unteres Band laufen über eine bestimmte Strecke in einem definierten Abstand synchron zueinander, wobei die Plattenmaterialien zwischen den Bändern mitgeführt werden können. Sie sind dabei in ihrer Höhe auf den Bandabstand begrenzt und werden in den meisten Fällen über die Bänder geheizt. Damit können bestimmte physikalische oder chemische Vorgänge unter Temperatureinwirkung ablaufen, wobei sich die Plattenmaterialien nicht über den vorgegebenen Abstand hinaus vertikal ausdehnen können.

Ein typisches Beispiel ist die Herstellung von Sandwichelementen aus jeweils einer oberen und einer unteren Deckschicht mit dazwischenliegendem Schaummaterial, etwa PUR/PIR-Schaum. Dazu kann stromaufwärts ein Gemisch der entsprechenden Vorläufersubstanzen aufgetragen werden und zu dem Schaum ausreagieren.

In vielen Fällen finden in solchen Doppelbandanlagen Dichtketten Anwendung, die mit den Bändern seitlich mitlaufen, um den beschriebenen Durchlaufkanal für die Plattenmaterialien zur Seite hin, also im Wesentlichen in horizontaler Richtung, in gewissem Umfang abzugrenzen oder abzudichten. Im Regelfall sind nach beiden Seiten Dichtketten vorgesehen. Zum Beispiel kann damit das Auslaufen noch nicht verfestigten Schaummaterials an den Längsseiten vermieden werden, wenn die Sandwichelemente keine entsprechenden Rahmenseitenteile aufweisen. Die Dichtketten können dabei ein auf die gewünschte Seitenform angepasstes Profil zeigen.

Im Stand der Technik bestehen solche Dichtketten aus metallischen Gliederketten, wobei die einzelnen Glieder mit Formstücken aus Kunststoff versehen sind, die in geradem Zustand der Dichtkette eine im Wesentlichen dichtschließende und langgestreckte Kontur mit der gewünschten Kantenform bilden. Die Formblöcke könnten bei Bedarf durch Wachs, Trennpapier oder dergleichen von den Sandwichelementen abgetrennt werden und zudem auch weitere Aufgaben der seitlichen Führung etwa von Blechdeckschichten oder Mineralwollfüllungen erfüllen.

Doppelbandanlagen und ihre Bestandteile sollen aus ökonomischen Gründen möglichst störungs- und insbesondere unterbrechungsfrei laufen, sodass Zuverlässigkeitsaspekte im Vordergrund stehen. Auf dieser Grundlage werden beständig Verbesserungen vorgeschlagen.

Der vorliegenden Erfindung stellt sich die Aufgabe, eine hinsichtlich der Zuverlässigkeit der Dichtkette verbesserte Lösung anzugeben.

Dieses Problem wird gelöst durch eine Dichtkette für die Seitenabdichtung in einer Doppelbandanlage mit Kettengliedern der Dichtkette, daran befestigten nicht-metallischen Dichtklötzen und Befestigungsbolzen für die Befestigung der Dichtklötze an den Kettengliedern, dadurch gekennzeichnet, dass die Dichtklötze jeweils einen Gegenlagerkörper aus einem hinsichtlich der Befestigung belastbareren Material als das Material der Dichtklötze enthalten, an dem der jeweilige Befestigungsbolzen befestigt ist.

Bevorzugte Ausgestaltungen der Erfindung finden sich in den abhängigen Ansprüchen und werden im Folgenden neben dem Grundprinzip der Erfindung weiter erläutert. Die einzelnen Merkmale sind dabei in den unterschiedlichsten Kombinationen erfindungswesentlich und beziehen sich grundsätzlich ohne ausdrückliche Erläuterung auf alle denkbaren Anspruchskategorien.

Die Erfinder schlagen eine Verbesserung der Zuverlässigkeit der Befestigung bzw. mechanischen Verbindung zwischen den Kettengliedern der Dichtkette, die üblicherweise aus Metallplatten oder Blechprofilen bestehen, und den eigentlichen formangepassten Dichtklötzen vor. Insbesondere besteht die Befürchtung, dass sich in das Dichtklotzmaterial durch einen Teil eines Kettenglieds hindurch eingeschraubte Befestigungsschrauben bei starker mechanischer Beanspruchung oder längerer Einsatzzeit wieder lösen könnten und somit einzelne Dichtklötze abfallen.

Erfindungsgemäß soll hier eine deutliche verbesserte Befestigung vorgesehen werden, um Betriebsstörungen oder gar -unterbrechungen als Konsequenz solcher Ausfälle vergleichsweise kleiner und materiell unbedeutender Einzelteile ganz ausschließen zu können. Dementsprechend geht die Erfindung von den in Form von Befestigungsschrauben grundsätzlich bekannten Befestigungsbolzen zwischen den Kettengliedern und den Dichtklötzen aus und sieht zusätzlich Gegenlagerkörper in den Dichtklötzen vor. Diese Gegenlagerkörper bestehen aus einem Material, dass hinsichtlich der beschriebenen Befestigung belastbarer ist als das Dichtklotzmaterial. Zum Beispiel und bevorzugter Weise kann der Gegenlagerkörper aus Metall bestehen und damit eine viel zuverlässigere Befestigung des Befestigungsbolzens erlauben, sei es, weil dieser in den Gegenlagerkörper eingeschraubt wird, oder auch bei einer anderen konkreten Festlegung des Bolzens an dem Gegenlagerkörper. In Betracht kämen beispielsweise auch Bajonettverbindungen, eingedrückte oder eingeschlagene Presssitzverbindungen oder auch an den Gegenlagerkörper angeschweißte oder einstückig mit ihm hergestellte Bolzen, die dann zum Beispiel an ihrem anderen Ende am Kettenglied angeschraubt sein könnten.

In jedem Fall wird ein zum Zweck der Befestigung zusätzlich vorgesehener Gegenlagerkörper aus geeigneterem Material als das Dichtklotzmaterial selbst, in der Regel ein Kunststoff, in dem Dichtklotz angeordnet, sodass der Befestigungsbolzen besser hält.

Der Gegenlagerkörper kann in ein von außen in den Dichtklotz eingebrachtes Loch eingesetzt sein, dass ungefähr senkrecht zur Befestigungsbolzenrichtung läuft. Dabei ist dann der Gegenlagerkörper hinsichtlich Form und/oder Größe so angepasst, dass er durch das Loch, das der Befestigungsbolzen durchsetzt und das von dem Kettenglied zu dem Gegenlagerkörper führt, nicht hindurch passt. Der Gegenlagerkörper kann also durch sein eigenes Loch eingesetzt werden und sperrt darin einen Auszug des mit ihm verbundenen Befestigungsbolzens in Richtung Kettenglied.

Dabei oder unabhängig davon kann der Gegenlagerkörper eine im Wesentlichen glatte und insbesondere gewindelose Außenmantelfläche haben, zum Beispiel ein an den Stirnflächen flach abgeschlossener Rundzylinder mit quer zur Zylinderachse laufendem Loch für die Montage des Befestigungsbolzens sein. In Betracht kommen auch Zylindergeometrien mit abweichendem Profil, etwa sechseckigem oder quadratischem Profil. Auch flache (blechähnliche) Gegenlagerkörper mit entsprechendem Innengewindeloch sind gut geeignet. Vorzugsweise ist die Außenmantelfläche jedenfalls glatt; der Gegenlagerkörper muss also nicht selbst eingeschraubt sein, sondern kann seine Funktion durch einfaches Einstecken und ohne eigenes Außengewinde erfüllen.

Der Gegenlagerkörper ist vorzugsweise in seiner axialen Richtung (bei zylindrischer Form) bzw., auch bei anderen Formen, in der Richtung seines Loches länger als in den Richtungen quer dazu und liegt vorzugsweise ungefähr vertikal. Er bildet also selbst einen (vorzugsweise glatten) Bolzen, wie das Ausführungsbeispiel veranschaulicht. Der Befestigungsbolzen wiederum kann ungefähr horizontal und ungefähr quer zur Transportrichtung bzw. Kettenrichtung liegen, also auch ungefähr senkrecht zum Gegenlagerkörper. Insbesondere kann der Befestigungsbolzen eine einfache Schraube sein, die in den Gegenlagerkörper eingeschraubt ist, etwa in ein Innengewinde eines Querlochs durch einen rundzylindrischen Gegenlagerkörper, und mit ihrem Kopf, auch über eine Beilagscheibe, an dem Kettenglied anliegt. Dabei (und ganz allgemein) kann pro Kontakt zwischen Kettenglied der Dichtkette und Dichtklotz genau ein Befestigungsbolzen und genau ein Gegenlagerkörper Verwendung finden und vorzugsweise pro Außenkettenglied genau ein Dichtklotz. Sowohl der Befestigungsbolzen als auch der Gegenlagerkörper sind vorzugsweise aus Metall, etwa Stahl.

Bei Dichtketten werden verschiedene Laschenformen unterschieden, wobei der Begriff "Lasche" die die jeweiligen Kettengelenkachsen verbindenden Elemente bezeichnet. Die Erfindung richtet sich bevorzugt auf sogenannte Bügellaschenketten, bei denen ein Teil, insbesondere die Hälfte, der Laschen als gebogene Laschen (etwa mit einem U-Profil in Kettenrichtung gesehen) ausgeführt sind. Vorzugsweise sind an diesen Bügellaschen jeweils die Dichtkörper befestigt und werden die Bügellaschen von sogenannten inneren Laschen jeweils verbunden. Die Verbindung zwischen den inneren Laschen und den äußeren Bügellaschen ist dabei durch eine Gelenkachse realisiert.

Die Erfindung betrifft neben der Dichtkette als solche auch eine damit ausgestattete Doppelbandanlage und einen einzelnen Dichtklotz für eine entsprechende Dichtkette. Sie betrifft dementsprechend auch die erfindungsgemäße Verwendung der Dichtkette für die Doppelbandanlage bzw. des Dichtklotzes für die Dichtkette (und die Doppelbandanlage). Vorsorglich wird die Offenbarung auch auf ein Verfahren zur Herstellung und zum Betreiben einer Dichtkette und einer Doppelbandanlage erstreckt.

Im Folgenden wird die Erfindung anhand eines Ausführungsbeispiels veranschaulicht, dessen Merkmal auch einzeln und in anderen Kombinationen erfindungswesentlich sein können und sich auf alle denkbaren Erfindungskategorien beziehen.
- Figuren 1a, b, c: zeigen übereinander eine konventionelle Dichtkette in verschiedenen Ansichten.
- Figur 2: zeigt eine größere Einzeldarstellung eines einzelnen Dichtklotzes und ein einzelnes Kettenglied einer konventionellen Dichtkette.
- Figur 3: zeigt ein erstes Ausführungsbeispiel für die Erfindung in einer im Übrigen Figur 2 entsprechenden Darstellung.
- Figur 4: zeigt ein zweites Ausführungsbeispiel der Erfindung mit einem doppelt geführten Dichtklotz.
- Figuren 5 - 7: zeigen Varianten zu dem ersten und zweiten Ausführungsbeispiel aus den Figuren 3 und 4.

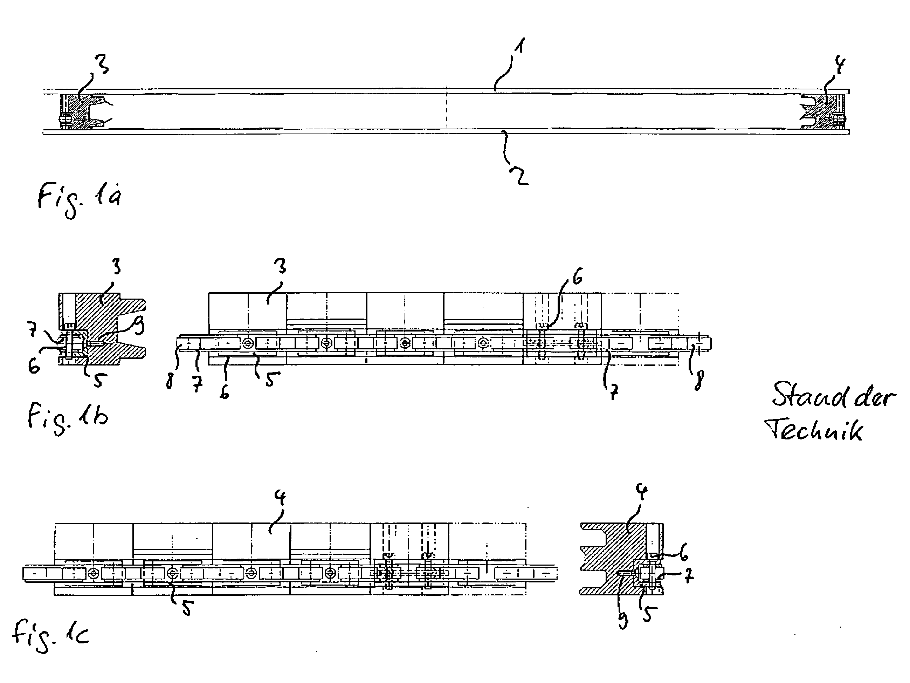

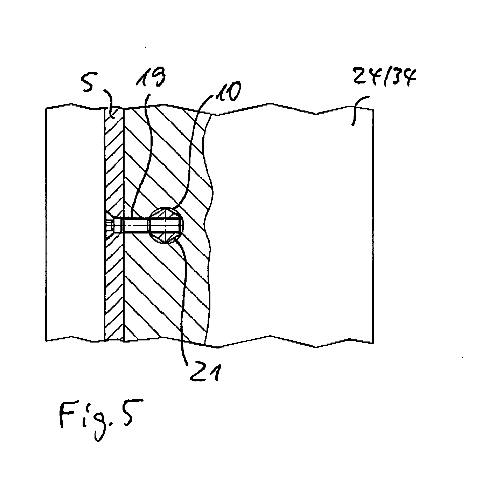

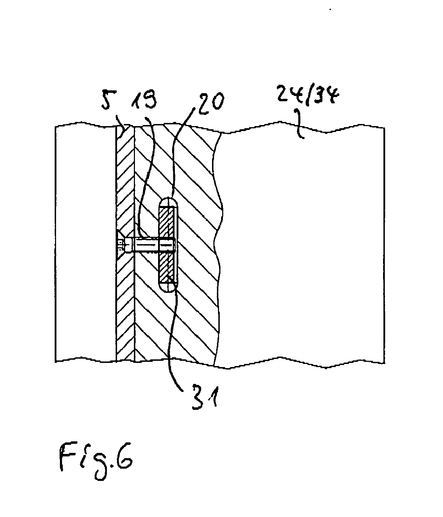

Die Figuren 1a - c dienen zur Veranschaulichung des Grundaufbaus einer Dichtkette, wobei hier der Stand der Technik dargestellt ist. Zur weiteren Veranschaulichung wird verwiesen auf die EP 1 177 873, die anhand eines spezifischen Modells hinsichtlich des Dichtkettenwechsels im Übrigen den Grundaufbau einer Doppelbandanlage und einer entsprechenden Dichtkette veranschaulicht. Die vorliegende Erfindung lässt sich mit dem Dichtkettenwechsel gemäß der EP 1 177 873 kombinieren, ist aber grundsätzlich davon unabhängig. Im Übrigen zeigen die Figuren 5 und 6 in dem erwähnten Dokument eine Möglichkeit einer konventionellen Befestigung eines Dichtklotzes an Kettengliedern über Presssitzbolzen. Dem gegenüber zeigen die Figuren 1a - c eine Bügellaschenkette mit Schraubbefestigung der Dichtklötze.

Figur 1 a zeigt mit den Bezugszeichen 1 und 2 jeweils im Querschnitt und nur symbolisch Platten eines oberen bzw. unteren Bandes einer an sich bekannten Doppelbandanlage (vergleiche EP 1 177 873). Die Blickrichtung entspricht der Transportrichtung, der Abstand der angestrebten Produktbreite. Wenn man genau hinschaut, erkennt man an den Randbereichen innerhalb der Platten 1 und 2 Blechprofile, die zu dem herzustellenden Produkt gehören und an ihren äußeren Kantenformen an schraffierte Klötze 3 und 4 angepasst sind. Dabei handelt es sich um Formstücke (Dichtklötze) aus einem Kunststoff, der eine geringe Haftung an PU-Schaum zeigt. Die Dichtklötze 3 und 4 schließen den Produktzwischenraum randseitig ab und verhindern ein Austreten von PU-Schaum daraus.

Figur 1b zeigt im linken Bereich den linken Dichtklotz 3 aus Figur 1a; Figur 1c zeigt im rechten Bereich den rechten Dichtklotz 4 aus Figur 1 a. Daneben ist jeweils ein Stück der Dichtkette in um 90° gedrehter Seitenansicht dargestellt.

Man erkennt dabei leicht, dass die Dichtkette eine Stahlkette aufweist, die die Dichtklötze 3 und 4 zusammenhält und führt. Die Stahlkette besteht im Wesentlichen aus Bügellaschen 5, die über Gelenkschraubbolzen 6 mit sog. innenliegenden Laschen 7 verbunden sind, wobei Rollen 8 drehbar innerhalb der Laschen und auf den Gelenkschraubbolzen 6 gehalten sind. Die U-Profilform der Bügellaschen 5 erkennt man in den Schnittdarstellungen, wobei sie in Figur 1b nach links und in Figur 1c nach rechts offen ist. In diesen Schnittdarstellungen ist darüberhinaus eine Befestigungs-Senkkopfschraube 9 zu erkennen, die die Basis (des U-Profils) der Bügellasche 5 in der entsprechenden Aufnahmenut des jeweiligen Dichtklotzes 3 oder 4 hält. Diese Schraube 9 ist in das Dichtklotzmaterial eingeschraubt.

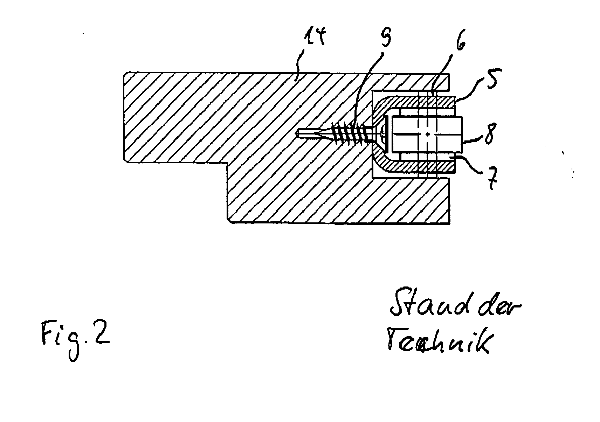

Figur 2 zeigt ein anderes und vergrößert dargestelltes Beispiel für den Stand der Technik. Der Dichtklotz ist hier mit 14 bezeichnet und hat eine einfachere Form als in den Figuren 1a bis c, ist also an einen flacheren und abweichend profilierten Sandwichelementrand angepasst. Die übrigen Bestandteile der Kette sind mit den gleichen Bezugsziffern wie in den Figuren 1a bis c bezeichnet, obwohl sie in der konkreten Form geringfügig abweichen. Man erkennt zusätzlich, dass die Senkkopfschraube 9 in ein vorgebohrtes Loch in dem Dichtklotz 14 eingreift.

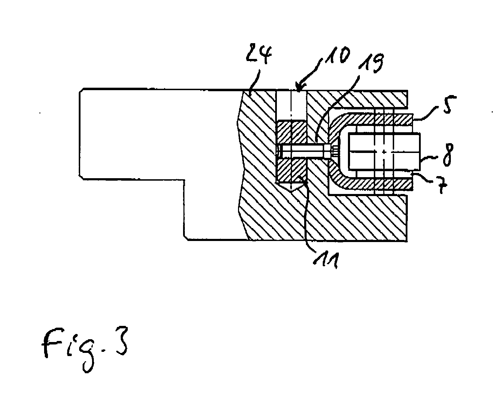

Figur 3 zeigt ein erstes Ausführungsbeispiel der Erfindung, wobei, soweit möglich, die gleichen Bezugsziffern wie in Figur 2 verwendet sind. Der Dichtklotz enthält hier eine vertikale Sacklochbohrung 10 und ist deswegen statt mit 14 hier mit 24 beziffert. Im Übrigen entspricht er dem Dichtklotz 14 aus Figur 2. In die Sacklochbohrung 10 ist ein langgestreckt-rundzylindrischer und an seiner Außenmantelfläche glatter Gegenlagerkörper 11 eingesteckt. Eine besondere Befestigungseinrichtung ist hierzu nicht nötig; vielmehr handelt es sich bei dem Gegenlagerkörper 11 um einen auch an den Stirnflächen flach endenden Zylinder mit einer mittigen Querbohrung mit Innengewinde. In diese Querbohrung greift eine Stahlschraube 19 mit normalem metrischen Gewinde ein, die von dem Unterschied im Gewinde abgesehen mit der Schraube 9 aus Figur 2 vergleichbar ist. Sie hält, ebenfalls als Senkkopfschraube, die Bügellasche 5 in der Aufnahmenut des Dichtklotzes 14. Allerdings greift sie in ein entsprechend belastbares Stahlgewinde in dem Gegenlagerkörper 11 ein, der sich relativ großflächig an der Innenmantelfläche des Loches 10 abstützen kann. Die Schraube ist daher praktisch nicht mehr auszureißen und bietet eine erheblich belastbarere Befestigung der Bügellasche und damit der ganzen Kette als die Schraube 9 in Figur 2. Dennoch ist der technische Zusatzaufwand relativ gering und beschränkt sich auf das zusätzliche Loch 10 und den Gegenlagerkörper 11. Das Risiko unerwünschter Ausfälle der Dichtkette wegen Sich-Lösens von Dichtklötzen ist sehr wirkungsvoll eliminiert, sodass mit einer geringfügigen Maßnahme die Gesamtzuverlässigkeit der ganzen Doppelbandanlage und letztlich sogar einer Produktionsstraße, in der diese aufgebaut ist, erhöht wird.

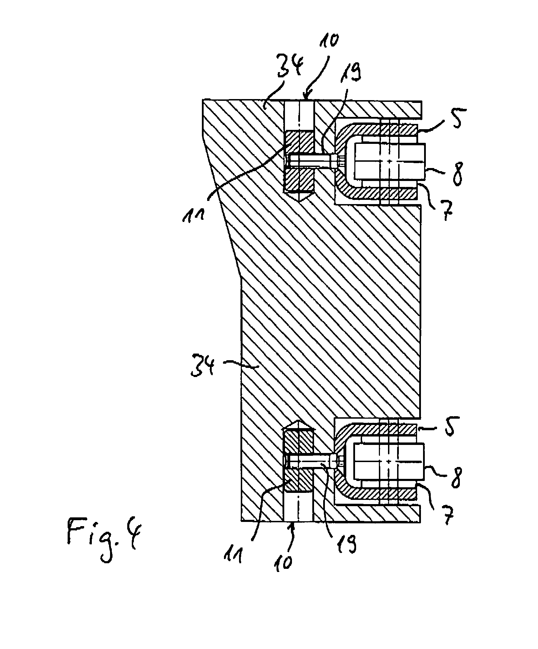

Figur 4 veranschaulicht eine Variante für relativ hohe Dichtklötze, hier 34. Die Kette, die Befestigungsschraube und der Gegenlagerkörper sind doppelt eingezeichnet, aber jeweils identisch zu Figur 3. Eine Kette liegt am oberen Rand, eine andere am unteren Rand des Dichtklotzes 34, sodass dieser trotz seiner erheblichen Höhe sicher geführt wird. Auch hier ist pro Kontakt zwischen Dichtklotz und Kettenglied je ein Befestigungsbolzen und ein Gegenlagerkörper vorgesehen.

Die Erfindung ist natürlich auch außerhalb von Bügellaschenketten anwendbar, beispielsweise bei einer Konstruktion wie in den Figuren 5 und 6 der zitierten EP 1 177 873.

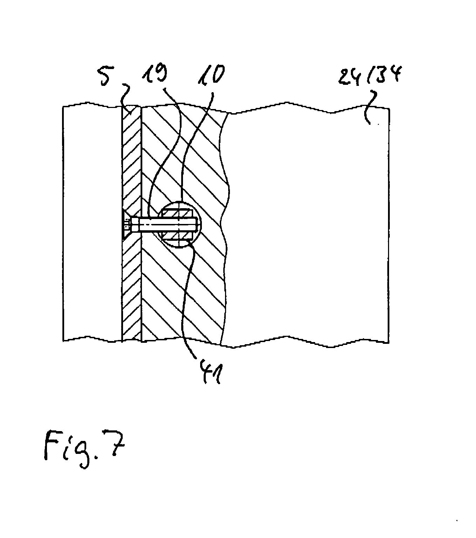

Figuren 5 bis 7 zeigen drei Varianten des Gegenlagerkörpers 11 aus den Figuren 3 und 4, nämlich mit sechseckigem Querschnittprofil in Figur 5, dort mit 21 bezeichnet, mit flachem (blechartigem), Querschnittsprofil in Figur 6, dort mit 31 bezeichnet, und schließlich mit quadratischem Querschnittsprofil in Figur 7, dort mit 41 bezeichnet. Man erkennt dabei, dass es auf das Querschnittsprofil nicht besonders ankommt und der Gegenlagerkörper neben Rundstäben auch aus abweichendem Material, etwa Strangmaterial oder etwas stärkeren Stahlplatten wie in Figur 6, hergestellt werden kann. Die jeweilige Öffnung wird soweit formangepasst, dass der Gegenlagerkörper hineinpasst, wobei nicht zwingend eine weitgehende Querschnittsprofilanpassung vorliegen muss wie zwischen Gegenlagerkörper 11 und Loch 10 in Figur 3 und 4. So ist das Loch 10 in Figur 5 rund, hat aber einen zu den größten auftretenden Durchmessern des Sechsecks (den Diagonalen) passenden Durchmesser; in Figur 6 sind wegen der einfacheren Bearbeitung durch Ausfräsen die Enden des Loches 20 verrundet; und zu Figur 7 gelten im Prinzip die Erläuterungen zur Figur 5. Die Blickrichtung ist gegenüber Figur 4 um 90° gedreht, sodass die Querschnittsprofile erkennbar sind. Erkennbar lassen sich die Funktionen des Gegenlagerkörpers mit allen dargestellten Querschnittsprofilen erreichen. Keiner der dargestellten Gegenlagerkörper weist dabei ein Außengewinde auf.

## Patentansprüche

1. Dichtkette für die Seitenabdichtung in einer Doppelbandanlage mit Kettengliedern (5) der Dichtkette,
daran befestigten nicht-metallischen Dichtklötzen (24, 34) und Befestigungsbolzen (19) für die Befestigung der Dichtklötze (24, 34) an den Kettengliedern (5),
**dadurch gekennzeichnet, dass** die Dichtklötze (24, 34) jeweils einen Gegenlagerkörper (11, 21, 31, 41) aus einem hinsichtlich der Befestigung belastbareren Material als das Material der Dichtklötze (24, 34) enthalten, an dem der jeweilige Befestigungsbolzen (19) befestigt ist.

2. Dichtkette nach Anspruch 1, bei der die Gegenlagerkörper (11, 21, 31, 41) in ein Loch (10, 20) des jeweiligen Dichtklotzes (24, 34) mit Längsrichtung senkrecht zur Befestigungsbolzenrichtung eingesetzt sind.

3. Dichtkette nach Anspruch 1 oder 2, bei der die Gegenlagerkörper (11, 21, 31, 41) eine glatte, gewindelose Außenmantelfläche aufweisen.

4. Dichtkette nach Anspruch 2 oder 3, bei der die Gegenlagerkörper (11, 21, 31, 41) in der Längsrichtung des Loches (10, 20) bzw. in der Achsenrichtung der Außenmantelfläche länger sind als in ihren Abmessungen quer dazu.

5. Dichtkette nach einem der vorstehenden Ansprüche, bei der die Befestigungsbolzen (19) mit ihrer Längsrichtung senkrecht zur Kettenrichtung und, bezogen auf die Einbaulage in der Doppelbandanlage, horizontal liegen.

6. Dichtkette nach einem der vorstehenden Ansprüche, bei der die Befestigungsbolzen (19) Schrauben sind, die in den Gegenlagerkörper (11, 21, 31, 41) eingeschraubt sind und mit ihrem Schraubenkopf an dem Kettenglied (5) anliegen.

7. Dichtkette nach einem der vorstehenden Ansprüche, bei der pro Kontakt eines Kettengliedes (5) und eines Dichtklotzes (24, 34) genau ein Befestigungsbolzen (19) und genau ein Gegenlagerkörper (11, 21, 31, 41) vorgesehen ist.

8. Dichtkette nach einem der vorstehenden Ansprüche, bei der an jedem Außenkettenglied (5) einer Kette genau ein Dichtklotz (24, 34) vorgesehen ist.

9. Dichtkette nach einem der vorstehenden Ansprüche, bei der die Gegenlagerkörper (11, 21, 31, 41) aus Metall bestehen.

10. Dichtkette nach einem der vorstehenden Ansprüche, die eine Bügellaschenkette aufweist.

11. Doppelbandanlage mit zumindest einer Dichtkette nach einem der vorstehenden Ansprüche.

12. Verwendung einer Dichtkette nach einem der Ansprüche 1 bis 10 für eine Doppelbandanlage.

13. Dichtklotz (24, 34) für eine Dichtkette nach einem der Ansprüche 1 bis 10 mit einem Gegenlagerkörper (11, 21, 31, 41) aus einem hinsichtlich der Befestigung belastbareren Material als das Material des Dichtklotzes (24, 34) und mit einer Befestigungseinrichtung zur Befestigung eines Befestigungsbolzens (19) daran, um ein Kettenglied (5) der Dichtkette an dem Dichtklotz (24, 34) befestigen zu können.

14. Verwendung eines Dichtklotzes (24, 34) nach Anspruch 13 für eine Dichtkette nach einem der Ansprüche 1 bis 10.
